# FASCICULE DE BREVET EUROPEEN

(11) **EP 3 350 122 B1**
(45) Date de publication et mention de la délivrance du brevet: **05.06.2019**
(21) Numéro de dépôt: 16781835.0
(22) Date de dépôt: 16.09.2016
(51) Int. Cl.: C01B 35/14

(54) **PROCÉDÉ DE PURIFICATION DU BORAZANE**
VERFAHREN ZUR REINIGUNG VON BORAZAN
METHOD FOR PURIFYING BORAZANE

(30) Priorité: 18.09.2015 FR 1558802
(43) Date de publication de la demande: 25.07.2018
(73) Titulaire: ARIANEGROUP SAS, 75015 Paris (FR)
(72) Inventeur: VANDECANDELAERE, Nicolas, 91750 Champcueil (FR); DUBOIS, Valentin, 91710 Vert le Petit (FR)
(74) Mandataire: Cabinet Beau de Loménie
(86) Numéro de dépôt international: PCT/FR2016/052348
(87) Numéro de publication internationale: WO 2017/046539

(56) Documents cités:
- WO-A1-2011/144878
- WO-A1-2015/100157
- US-A1- 2014 186 252
- LIANG GAO ET AL: "Liquefaction of Solid-State BH 3 NH 3 by Gaseous NH 3", INORGANIC CHEMISTRY, vol. 50, no. 10, 16 mai 2011 (2011-05-16), pages 4301-4306, XP055294005, EASTON, US ISSN: 0020-1669, DOI: 10.1021/ic200373g

## Description

La présente invention a pour objet un procédé de purification du borazane.

Le borazane ou ammonia borane, de formule chimique NH₃BH₃, qui existe sous la forme d'une poudre cristalline blanche, présente le potentiel unique de contenir 19,6 % en masse d'hydrogène. Il est ainsi positionné comme un candidat particulièrement intéressant pour le stockage solide de l'hydrogène.

Le borazane peut être obtenu selon différentes voies de synthèse. La plus courante et la plus mature de ces voies de synthèse est la métathèse de sels, sel de borohydrure d'une part (NaBH₄, par exemple) et sel d'ammonium d'autre part ((NH₄)₂CO₃, par exemple), dans un solvant organique. La voie de synthèse basée sur un déplacement entre un borane (R.BH₃) et une amine, typiquement l'ammoniac, a également été largement décrite. Quelle que soit en fait la voie de synthèse exacte du borazane mise en oeuvre (à partir de réactifs adéquats), le borazane est toujours obtenu plus ou moins pollué par des traces de réactifs (part desdits réactifs qui n'a pas réagi), par des impuretés renfermées dans les réactifs, par des sous-produits de la réaction de synthèse et/ou par des produits de décomposition dudit borazane (oxydes de bore, par exemple). Le point de fusion du borazane est impacté par la présence de ces impuretés. Plus le borazane est pur, plus son point de fusion est élevé.

L'utilisation du borazane comme générateur d'hydrogène (plus exactement comme générateur de gaz hydrogénés renfermant un taux plus ou moins conséquent d'hydrogène) a été décrite selon plusieurs modes : par hydrolyse dudit borazane, par traitement thermique dudit borazane (celui-ci se décompose en plusieurs étapes) et par combustion (exothermique) auto-entretenue dudit borazane, formulé avec au moins un oxydant inorganique.

Quel que soit le mode exact d'utilisation du borazane comme générateur d'hydrogène, il est vivement opportun de disposer d'un borazane de grande pureté, en référence à la pureté de l'hydrogène généré et bien évidemment aussi au rendement de la réaction de génération dudit hydrogène. Par ailleurs, la pureté du borazane est un facteur qui influence sa stabilité thermique : il est en effet connu que les impuretés présentes ont une influence néfaste sur la tenue en température du borazane ; elles sont responsables de faibles températures de décomposition (exothermique, à l'état solide) et de fusion dudit borazane (voir ci-dessus).

Diverses méthodes de purification du borazane (solide) ont déjà été proposées.

Nombre d'entre elles s'appuient sur une recristallisation en solvant. Selon le solvant sélectionné et la solubilité du borazane dans celui-ci, la purification est plus ou moins efficace, plus ou moins consommatrice en matières premières (borazane, solvant) et possède donc un rendement plus ou moins intéressant. Par ailleurs, la mise en oeuvre d'une telle purification peut impliquer la soumission du produit à de hautes températures susceptibles d'avoir un impact néfaste sur celui-ci : le borazane est en fait relativement peu stable à des températures supérieures à 50°C.

La demande de brevet US 2014/0186252 décrit ainsi une méthode de purification du borazane qui comprend :
- la dissolution du borazane dans une solution aqueuse alcaline,
- le chauffage de la solution obtenue aux fins de décomposition et de précipitation des impuretés,
- l'élimination des impuretés précipitées,
- le refroidissement de la solution aqueuse débarrassée desdites impuretés aux fins de précipitation du borazane purifié, et
- la récupération dudit borazane purifié précipité.

La demande WO 2011/144878 enseigne par ailleurs une méthode pour récupérer du borazane, pollué par au maximum 2 % en masse d'impuretés, à partir d'une solution de tétrahydrofurane le renfermant. Ladite méthode, avantageusement mise en oeuvre suite à la synthèse dudit borazane par métathèse, comprend essentiellement une précipitation sélective du borazane à l'aide d'un non solvant. Le borazane précipité peut encore être purifié par dissolution sélective dans un alcool.

Un procédé similaire est divulgué dans la demande WO2015/100157 qui enseigne que le borazane peut être purifié par séparation dans des mélanges de solutions aqueuses et organiques.

Des techniques de purification du borazane, plus exotiques, ont également été décrites, comme par exemple la sublimation. De telles techniques sont généralement compliquées à mettre en oeuvre en raison de leurs conditions opératoires (notamment de pression et/ou température) contraignantes.

Il a par ailleurs été décrit, dans Inorg. Chem. 2011, 50, 4301-4306, que, sous 1 à 4 bar d'ammoniac, le borazane absorbe, de façon réversible, jusqu'à 6 équivalent d'ammoniac et devient liquide à 0°C.

Dans un tel contexte, il est présentement décrit un procédé de purification du borazane original et particulièrement intéressant, de par son efficacité, ses bons rendements, le fait qu'il soit peu coûteux en matières premières, le fait que ses conditions opératoires (de pression et température) soient peu contraignantes (moins contraignantes que celles de procédés de purification de l'art antérieur) et le fait qu'il puisse être mis en oeuvre en semi-continu, voire en continu.

Ledit procédé de purification du borazane, original et particulièrement intéressant, est basé sur le phénomène ci-après : la liquéfaction du borazane (solide) en présence d'ammoniac gazeux (la liquéfaction dudit borazane (solide) par ledit d'ammoniac gazeux) et ce, notamment à température ambiante et pression atmosphérique. On doit plus exactement parler d'une co-liquéfaction du borazane (solide) et de l'ammoniac (gazeux). Des interactions physico-chimiques, analogues à celles qui se développent lors de la solubilisation du borazane dans l'ammoniac liquide (à une température inférieure ou égale à -33°C ou à une pression supérieure ou égale à 7-8 bars ; l'homme du métier connait le diagramme liquide-vapeur de l'ammoniac), expliquent vraisemblablement ladite co-liquéfaction. Cette co-liquéfaction est sélective : elle permet de séparer au moins une partie des impuretés présentes, insolubles.

La co-liquéfaction (du borazane (solide) et de l'ammoniac (gazeux)) a été observée par les inventeurs (ils ont notamment observé qu'un flux d'ammoniac gazeux, à très faible débit, dirigé sur 2 g de poudre de borazane provoquait la déliquescence de la poudre puis sa liquéfaction (0,7 g d'ammoniac gazeux ayant été consommé) ; voir aussi l'exemple ci-après) : une phase liquide est générée ; à partir de cette phase liquide, il est possible de récupérer successivement de l'ammoniac et du borazane, ledit borazane étant récupéré en une quantité correspondant quasi à celle de départ (voir ci-après).

Cette co-liquéfaction est sélective dans la mesure où une phase solide est générée parallèlement à la phase liquide et où le borazane récupéré à partir de ladite phase liquide est plus pur que le borazane de départ (la comparaison des points de fusion et des spectres RMN ¹H et ¹¹B prouvent cette affirmation) (voir ci-après).

Ce phénomène de (co-)liquéfaction et son exploitation dans le cadre d'un procédé de purification du borazane sont donc particulièrement intéressantes en ce qu'ils permettent de se dispenser de toutes conditions opératoires lourdes de liquéfaction de l'ammoniac.

La présente invention a donc pour objet un procédé de purification du borazane, plus précisément un procédé de purification du borazane solide renfermant des impuretés. Ledit borazane renferme lesdites impuretés en une teneur plus ou moins conséquente. Il peut ainsi, par exemple, présenter un point de fusion inférieur à 115°C, voire inférieur à 113°C, voire même inférieur à 110°C.

Le procédé de purification de l'invention comprend la mise en contact du borazane solide renfermant des impuretés avec de l'ammoniac gazeux, plus précisément et de façon caractéristique avec un flux d'ammoniac gazeux. On a vu ci-dessus que d'une telle mise en contact résulte la liquéfaction du borazane solide (= la co-liquéfaction dudit borazane solide avec de l'ammoniac gazeux), liquéfaction sélective responsable de la purification recherchée, liquéfaction rendant inutile l'intervention d'un solvant couteux, d'où (en partie) le grand intérêt du procédé de purification de l'invention.

Ledit procédé de purification de l'invention comprend donc une mise en contact borazane solide (NH₃BH_{3 (s)})/flux d'ammoniac gazeux (NH_{3 (g)}); de cette mise en contact, il résulte une (co-)liquéfaction sélective dudit borazane solide.

Le procédé de purification du borazane de l'invention comprend :
a) la mise en contact du borazane solide (NH₃BH_{3 (s)}) renfermant des impuretés avec un flux d'ammoniac gazeux (NH_{3 (g)})pour l'obtention, par liquéfaction sélective du borazane, d'une phase liquide (L) renfermant le borazane et de l'ammoniac liquéfiés et d'une phase solide (S) constituée d'au moins une partie desdites impuretés ;
b) la séparation desdites phases liquide (L) et solide (S) pour la récupération de ladite phase liquide (L) d'une part, et de ladite phase solide (S) d'autre part ;
c) l'élimination de l'ammoniac de ladite phase liquide (L) récupérée, cette élimination provoquant la précipitation du borazane purifié (NH₃BH_{3 (s')}) ; et
d) la récupération dudit borazane précipité purifié (NH₃BH_{3 (s')}).

Le procédé de purification de l'invention ne repose pas sur une dissolution sélective du borazane dans un solvant conventionnel. Il repose sur une liquéfaction sélective avec un partenaire peu onéreux : l'ammoniac gazeux (NH_{3 (g)}); l'alimentation en ledit partenaire étant mise en oeuvre en continu dans la mesure où celui-ci intervient sous la forme d'un flux (on comprend que la quantité suffisante requise est mise à disposition plus ou moins rapidement en fonction du débit dudit flux. Il n'y a aucune contrainte sur ledit débit : il est toujours possible d'obtenir le résultat de liquéfaction escompté (plus ou moins rapidement, selon ledit débit plus ou moins fort)).

Ledit procédé de purification est généralement mis en oeuvre à la pression atmosphérique et à la température ambiante (c'est-à-dire à une température (T) comprise entre 18°C et 25°C : 18°C ≤ T ≤ 25°C) ; ledit procédé de purification est ainsi généralement mis en oeuvre avec utilisation d'ammoniac gazeux à pression atmosphérique et à température ambiante (c'est-à-dire à une température (T) comprise entre 18°C et 25°C ; 18°C ≤ T ≤ 25°C). Il ne saurait être totalement exclu du cadre de l'invention la mise en oeuvre du procédé à une pression différente de la pression atmosphérique et/ou à une température différente de la température ambiante, l'ammoniac intervenant étant évidemment toujours gazeux. Toutefois, *a priori,* ceci ne présente guère d'intérêt. Au contraire, l'intérêt du procédé de l'invention réside en grande partie dans sa mise en oeuvre possible (et donc particulièrement avantageuse) à la pression atmosphérique et à la température ambiante.

L'homme du métier a d'ores et déjà saisi le grand intérêt du procédé de purification de l'invention. Il n'utilise qu'un produit peu coûteux (l'ammoniac gazeux, partenaire de liquéfaction) et assure le résultat escompté (de séparation d'au moins une partie des impuretés) dans des conditions opératoires, de température et pression, douces, avantageuses tant en référence à la mise en oeuvre dudit procédé qu'en référence à la stabilité du borazane à purifier et du borazane purifié. Ledit procédé est également particulièrement intéressant en ce qu'il peut être mis en oeuvre en semi-continu (étapes a et b, dans un premier temps puis, de façon séparée, étapes c et d, dans un deuxième temps), voire en continu (étapes a à d, en continu). Il est très avantageusement mis en oeuvre en continu.

Le borazane solide à purifier selon le procédé de l'invention (à mettre donc en contact avec un flux d'ammoniac gazeux pour sa liquéfaction) peut être sous forme dispersée, notamment sous la forme d'une poudre ou sous la forme de granulés. Il peut aussi être sous une forme non dispersée, une forme monolithe. La formation d'une phase liquide a été observée, quelle que soit la forme exacte du borazane solide mise au contact de l'ammoniac gazeux.

L'ammoniac gazeux est avantageusement utilisé en un rapport molaire R = ammoniac gazeux/borazane solide (R = NH_{3 (g)}/NH₃BH_{3 (s)}) supérieur à 1. On préconise vivement l'utilisation d'un excès d'ammoniac. L'ammoniac gazeux est en fait très avantageusement utilisé en un tel rapport molaire (R) entre 5 et 15 (5 ≤ R ≤ 15).

Pour assurer la mise en contact du borazane solide et du flux d'ammoniac gazeux (NH₃BH_{3 (s)}), on peut mettre en oeuvre un balayage de l'atmosphère au-dessus dudit borazane solide (sous forme dispersée ou non) ou un passage du flux au plus près dudit borazane solide (sous forme dispersée ou non), voire au travers dudit borazane solide (sous forme dispersée).

Les inventeurs ont donc observé la liquéfaction sélective du borazane, c'est-à-dire l'apparition d'une dispersion dont la phase liquide renferme le borazane (co-liquéfié avec de l'ammoniac) et dont la phase dispersée, solide, consiste en des impuretés.

La séparation phase liquide/phase solide peut être mise en oeuvre par tout type de méthode de séparation liquide/solide conventionnelle, notamment par filtration ou centrifugation. Elle est avantageusement mise en oeuvre par filtration.

Pour la récupération du borazane purifié (de par l'élimination de la phase solide) à partir du borazane liquéfié, il convient d'éliminer l'ammoniac de la phase liquide. Celui-ci est opportunément éliminé par évaporation, avec ou sans mise sous vide.

L'élimination de l'ammoniac (en fait, 1) tout d'abord de celui présent dans le ciel gazeux et 2) de celui présent dans la phase liquide (qui transite par le ciel gazeux)) provoque un retour à l'état solide du borazane. Le borazane précipité (sous forme dispersée) correspond à celui de départ débarrassé des impuretés qui n'ont pas été dissoutes dans la phase liquide (résultant de la co-liquéfaction du borazane de d'ammoniac), lors de l'étape de mise en contact du borazane solide avec le flux d'ammoniac gazeux.

On se propose de préciser ci-après, de façon nullement limitative, deux variantes de mise en oeuvre du procédé de l'invention.

Selon une première variante, c'est à l'issue de la mise en contact du borazane solide avec le flux d'ammoniac gazeux (étape a du procédé de purification de l'invention), après donc la liquéfaction dudit borazane solide (= la co-liquéfaction borazane solide/ ammoniac gazeux) et l'arrêt dudit flux, que la séparation des phases liquide et solide (étape b du procédé de purification de l'invention) est mise en oeuvre.

Selon une deuxième variante, la séparation des phases liquide et solide (étape b du procédé de purification de l'invention) est mise en oeuvre pendant la mise en contact du borazane solide avec le flux d'ammoniac gazeux (étape a du procédé de purification de l'invention ; lesdites étapes a et b étant alors mises en oeuvre quasi simultanément) ; ladite séparation desdites phases liquide et solide est ainsi mise en oeuvre au fur et à mesure de la liquéfaction sélective. Pour la mise en oeuvre de cette deuxième variante, on peut notamment procéder comme suit. Le borazane solide est placé sur un filtre. Il est mis au contact d'un flux gazeux d'ammoniac ; ledit flux gazeux d'ammoniac traversant avantageusement ledit filtre. La phase liquide générée est récupérée en dessous dudit filtre tandis que la phase solide est retenue par ledit filtre. Si le borazane est présent sous forme dispersée, on conçoit que la phase liquide générée puisse progresser par sédimentation au travers de ladite forme dispersée et qu'elle traverse ensuite le filtre. Si le borazane est présent sous forme monolithe, on conçoit qu'il n'occupe pas toute la surface du filtre, de sorte que la phase liquide générée ait accès audit filtre.

On propose ci-après de préciser l'une et l'autre desdites variantes de mise en oeuvre du procédé de l'invention en référence aux figures annexées (1A à 2C).

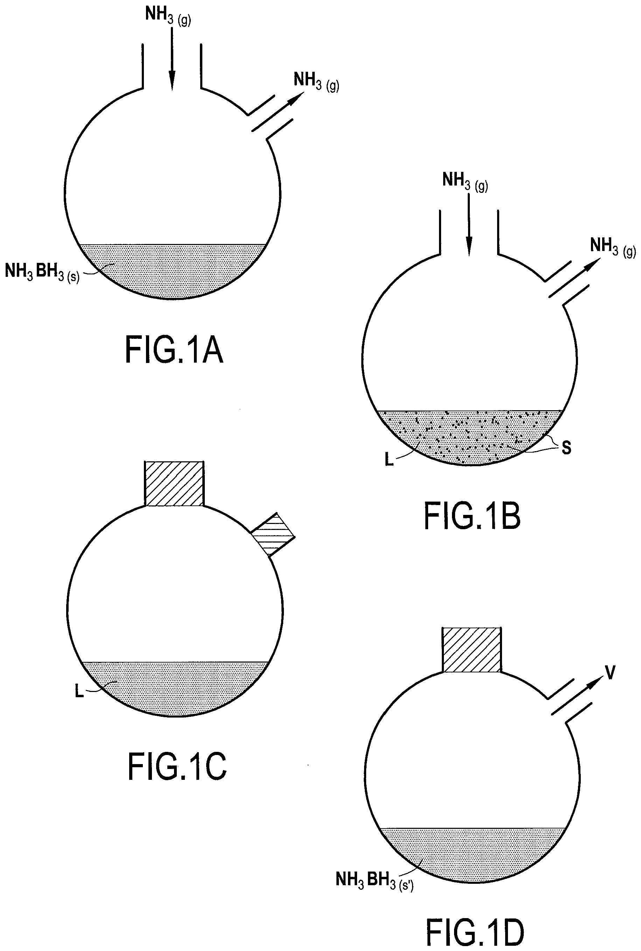

Les figures 1A, 1B, 1C et 1D illustrent une première variante de mise en oeuvre du procédé de purification du borazane selon l'invention (= la première variante précisée ci-dessus), plus précisément une première variante de mise en oeuvre selon laquelle c'est à l'issue de la mise en contact du borazane solide avec un flux d'ammoniac gazeux (figure 1B) que la séparation des phases liquide et solide est opérée.

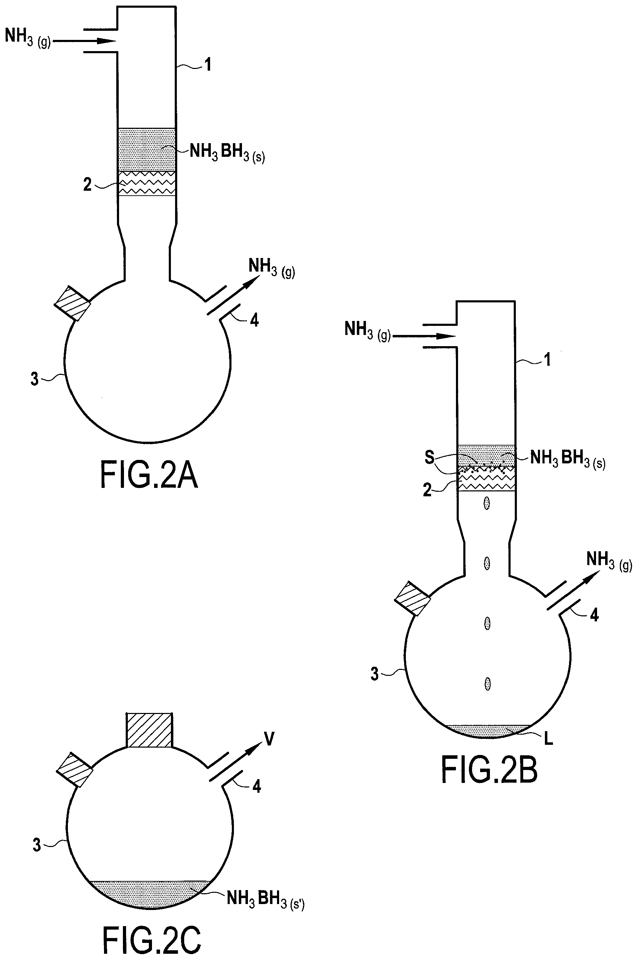

Les figures 2A, 2B et 2C illustrent une deuxième variante de mise en oeuvre du procédé de purification du borazane selon l'invention (= la deuxième variante précisée ci-dessus), plus précisément une deuxième variante de mise en oeuvre selon laquelle la séparation des phases liquide et solide est mise en oeuvre pendant la mise en contact du borazane solide avec un flux d'ammoniac gazeux (figure 2B).

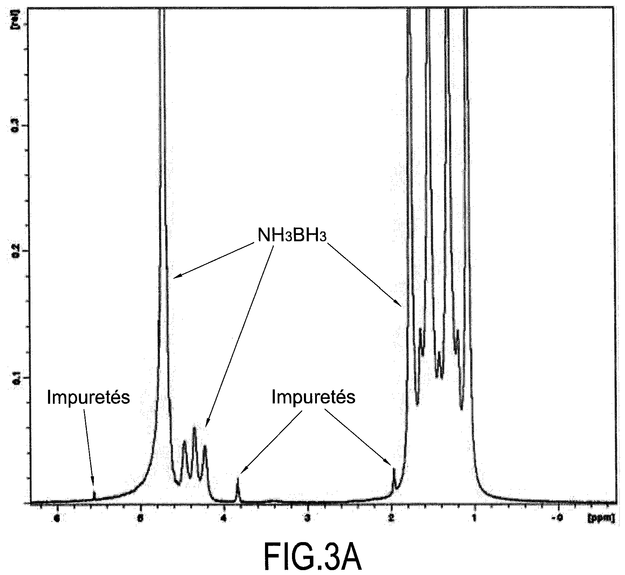

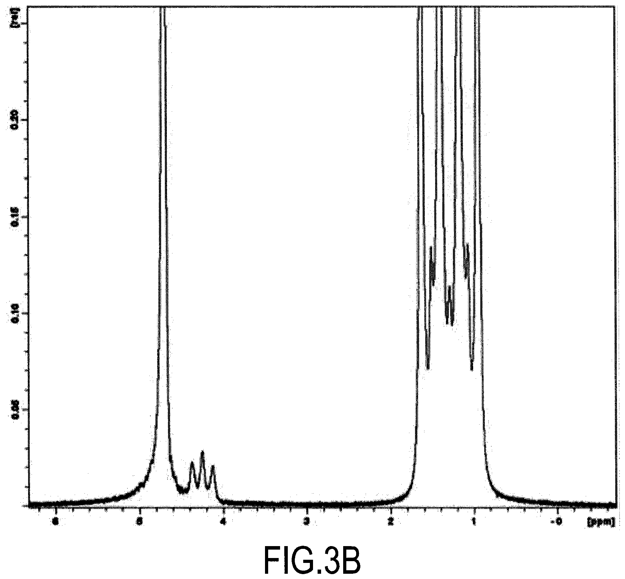

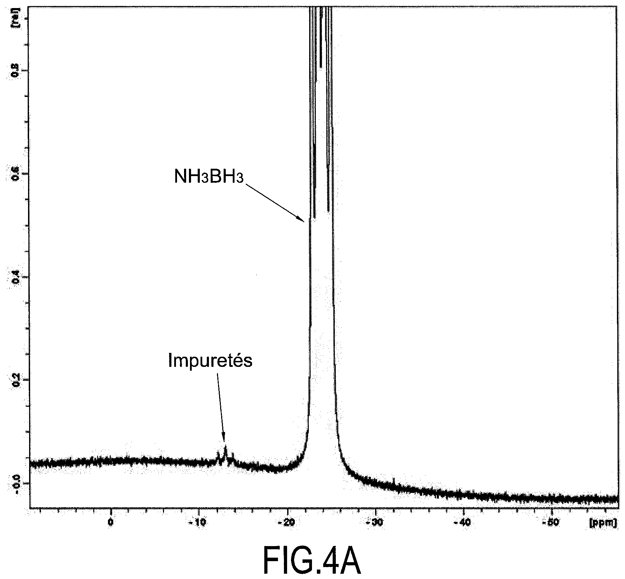

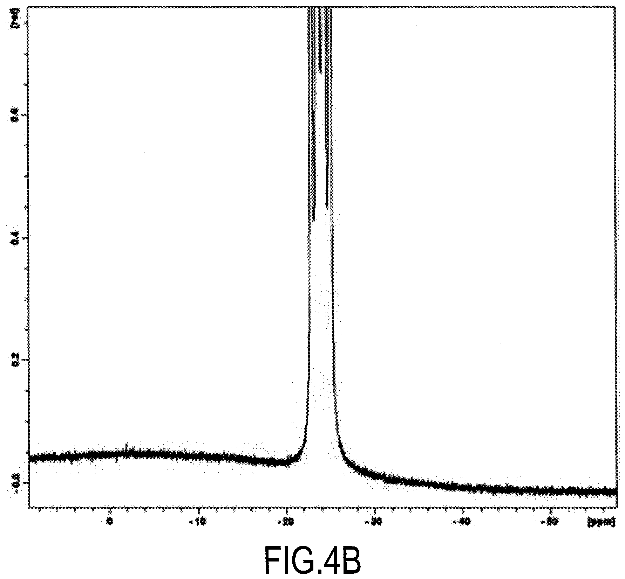

Les figures 3A et 3B montrent respectivement les spectres RMN ¹H (solvant : D₂O) du borazane avant (figure 3A) et après (figure 3B) purification selon l'exemple de l'invention (voir ci-après) ; les figures 4A et 4B montrent respectivement les spectres RMN ¹¹B (solvant : D₂O) du borazane avant (figure 4A) et après (figure 4B) purification selon l'exemple de l'invention (voir ci-après).
La figure 1A schématise donc une mise en contact borazane solide (NH₃BH_{3 (s)})/flux d'ammoniac gazeux (NH_{3 (g)}). Le borazane solide est dispersé au fond d'un ballon. Ledit ballon est parcouru par un flux d'ammoniac gazeux (NH_{3 (g)}).
La figure 1B schématise le résultat obtenu : le borazane solide a été liquéfié. Au sein de la phase liquide L obtenue, on trouve des impuretés solides S.

Après arrêt du flux d'ammoniac, il n'y a aucune difficulté à séparer les phases liquide L et solide S. La phase liquide L est obtenue débarrassée des impuretés solides S (figure 1C).

Sur la figure 1D, on a montré l'élimination de l'ammoniac (par mise sous vide du ballon renfermant la phase liquide L ; ladite mise sous vide est schématisée par la flèche V). Ladite figure 1D montre en fait le contenu du ballon en fin de ladite mise sous vide V, i.e. le borazane purifié obtenu, référencé NH₃BH_{3 (s')}.

Sur la figure 2A, on a représenté :
- en 1, un schlenk,
- en 2, un filtre,
- en 3, un ballon tricol, et
- en 4, un col dudit ballon tricol.

Les flèches symbolisent le flux d'ammoniac gazeux (NH_{3 (g)})mis en circulation.

Le borazane solide (NH₃BH_{3 (s)}) à purifier est disposé sur ledit filtre 2.

Au contact du flux d'ammoniac gazeux (NH_{3 (g)}), ledit borazane solide (NH₃BH_{3 (s)}) se liquéfie ; liquéfié (co-liquéfié avec de l'ammoniac gazeux), il traverse ledit filtre 2 et s'accumule au fond du ballon 3. La phase solide S est arrêtée par ledit filtre 2. Ceci (étapes a) et b) du procédé de l'invention) est schématisé sur la figure 2B.

Lorsque tout le borazane solide a été liquéfié, le flux d'ammoniac gazeux est arrêté. On procède alors à l'élimination de l'ammoniac par mise sous vide du volume du ballon 3. Cette mise sous vide est schématisée, sur la figure 2C, par la flèche V. La figure 2C montre en fait le contenu du ballon 3 en fin de ladite mise sous vide V. Le borazane solide (NH₃BH_{3 (s)}) initialement disposé sur le filtre 2 est obtenu débarrassé de la phase solide S, c'est-à-dire purifié. Il a été référencé NH₃BH_{3 (s')}.

Le procédé de l'invention, plus précisément sa deuxième variante, telle que précisée ci-dessus, est illustré par l'exemple ci-après.

### EXEMPLE

On a utilisé un dispositif, tel que schématisé sur les figures 2A et 2B, comportant un schlenk (de 4 cm de diamètre) muni d'un filtre et relié à un ballon tricol.

De l'ammonia borane (ou borazane) en poudre (environ 4 g) a été placé sur le filtre et un flux d'ammoniac gazeux (environ 45 mL/min) a été passé au travers du lit de poudre et dudit filtre (dans le sens : amont vers aval du filtre), à température ambiante (20°C) et à pression atmosphérique. Dans ces conditions, l'ammonia borane a été (co-)liquéfié et, par sédimentation, la phase liquide générée est passée au travers du filtre. Les impuretés insolubles dans ladite phase liquide sont restées sur le filtre.

Après 2 heures de filtration sous ammoniac, la phase liquide filtrée a été récupérée et séchée sous air ambiant (évaporation naturelle de l'ammoniac) pour obtenir l'ammonia borane purifié sous forme solide (figure 2C). On a ainsi récupéré 3,89 g d'ammonia-borane purifié.

L'efficience de la purification a été évaluée en analysant le point de fusion de l'ammonia borane par analyse DSC (« Differential Scanning Calorimetry »), mise en oeuvre avec une rampe de montée en température de 5°C/min. Avant purification selon l'invention, le point de fusion du produit était de 112,8°C ; après purification selon l'invention, il était de 115,9°C. Cette augmentation de la température de fusion traduit une amélioration de la pureté du produit.

On propose par ailleurs l'examen comparatif des spectres RMN ¹H et RMN ¹¹B du borazane utilisé dans ledit exemple, avant et après purification selon l'invention (voir respectivement les figures 3A et 3B et les figures 4A et 4B). On voit clairement que des pics, correspondant assurément à des impuretés (voir les quantités relatives par rapport aux pics correspondant aux atomes d'hydrogène ou aux atomes de bore du borazane), présents sur les spectres du borazane à purifier, ne sont plus présents sur les spectres du borazane purifié.

## Revendications

1. Procédé de purification du borazane solide (NH₃BH_{3 (s)}) renfermant des impuretés, **caractérisé en ce qu'**il comprend :
a) la mise en contact du borazane solide (NH₃BH_{3 (s)}) renfermant des impuretés avec un flux d'ammoniac gazeux (NH_{3 (g)})pour l'obtention, par liquéfaction sélective du borazane, d'une phase liquide (L) renfermant le borazane et de l'ammoniac liquéfiés et d'une phase solide (S) constituée d'au moins une partie desdites impuretés ;
b) la séparation desdites phases liquide (L) et solide (S) pour la récupération de ladite phase liquide (L) d'une part, et de ladite phase solide (S) d'autre part ;
c) l'élimination de l'ammoniac de ladite phase liquide (L) récupérée, cette élimination provoquant la précipitation du borazane purifié (NH₃BH_{3 (s')}) ; et
d) la récupération dudit borazane précipité purifié (NH₃BH_{3 (s')}).

2. Procédé selon la revendication 1, **caractérisé en ce qu'**il est mis en oeuvre à la pression atmosphérique et à la température ambiante.

3. Procédé selon l'une des revendications 1 ou 2, **caractérisé en ce qu'**il est mis en oeuvre en continu.

4. Procédé selon l'une quelconque des revendications 1 à 3, **caractérisé en ce que** ledit borazane solide (NH₃BH_{3 (s)}) est sous forme dispersée ou sous forme non dispersée.

5. Procédé selon l'une quelconque des revendications 1 à 4, **caractérisé en ce que** l'ammoniac gazeux (NH_{3 (g)})est utilisé en un rapport molaire ammoniac gazeux/borazane solide (R = NH_{3 (g)}/NH₃BH_{3 (s)}) supérieur à 1, avantageusement entre 5 et 15.

6. Procédé selon l'une quelconque des revendications 1 à 5, **caractérisé en ce que** la séparation des phases liquide (L) et solide (S) est mise en oeuvre par filtration ou par centrifugation, avantageusement par filtration.

7. Procédé selon l'une quelconque des revendications 1 à 6, **caractérisé en ce que** l'ammoniac est éliminé de ladite phase liquide (L) récupérée par évaporation.

8. Procédé selon l'une quelconque des revendications 1 à 7, **caractérisé en ce que** ladite séparation est mise en oeuvre à l'issue de ladite mise en contact, après l'arrêt dudit flux.

9. Procédé selon l'une quelconque des revendications 1 à 7, **caractérisé en ce que** ladite séparation est mise en oeuvre pendant ladite mise en contact.

10. Procédé selon la revendication 9, **caractérisé en ce que** ledit borazane solide (NH₃BH_{3 (s)}), placé sur un filtre (2), est mis au contact d'un flux gazeux d'ammoniac (NH_{3 (g)})et **en ce que** la phase liquide (L) générée est récupérée en dessous dudit filtre (2) tandis que la phase solide (S) est retenue par ledit filtre (2).

## Patentansprüche

1. Verfahren zur Reinigung von festem Borazan (NH₃BH_{3 (s)}), in dem Verunreinigungen enthalten sind, **dadurch gekennzeichnet, dass** es umfasst:
a) In-Kontakt-Bringen des festen Borazans (NH₃BH_{3 (s)}), in dem Verunreinigungen enthalten sind, mit einem Fluss von gasförmigem Ammoniak (NH_{3 (g)})zum Erhalten, durch die selektive Verflüssigung des Borazans, einer flüssigen Phase (L), in der das verflüssigte Borazan und das verflüssigte Ammoniak enthalten sind, und einer festen Phase (S), die zumindest aus einem Teil der Verunreinigungen besteht,
b) Trennung der flüssigen (L) und festen Phase (S) für die Rückgewinnung der flüssigen Phase (L) einerseits und der festen Phase (S) andererseits,
c) Eliminierung des Ammoniaks der zurückgewonnenen flüssigen Phase (L), wobei diese Eliminierung die Ausfällung von gereinigtem Borazan (NH₃BH_{3 (s')}) verursacht, und
d) Rückgewinnung des ausgefällten gereinigten Borazans (NH₃BH_{3 (s')}).

2. Verfahren nach Anspruch 1, **dadurch gekennzeichnet, dass** es bei Atmosphärendruck und Umgebungstemperatur umgesetzt wird.

3. Verfahren nach einem der Ansprüche 1 oder 2, **dadurch gekennzeichnet, dass** es kontinuierlich umgesetzt wird.

4. Verfahren nach einem der Ansprüche 1 bis 3, **dadurch gekennzeichnet, dass** das feste Borazan (NH₃BH_{3 (s)}) in dispergierter Form oder in nicht dispergierter Form vorliegt.

5. Verfahren nach einem der Ansprüche 1 bis 4, **dadurch gekennzeichnet, dass** das gasförmige Ammoniak (NH_{3 (g)})in einem Molverhältnis von gasförmigem Ammoniak/festem Borazan (R = NH_{3 (g)}/ NH₃BH_{3 (s)}) verwendet wird, das größer als 1 ist, vorteilhafterweise zwischen 5 und 15.

6. Verfahren nach einem der Ansprüche 1 bis 5, **dadurch gekennzeichnet, dass** die Trennung der flüssigen (L) und festen Phase (S) durch eine Filtration oder durch eine Zentrifugation, vorteilhafterweise durch eine Filtration, umgesetzt wird.

7. Verfahren nach einem der Ansprüche 1 bis 6, **dadurch gekennzeichnet, dass** das Ammoniak aus der zurückgewonnenen flüssigen Phase (L) durch eine Verdampfung eliminiert wird.

8. Verfahren nach einem der Ansprüche 1 bis 7, **dadurch gekennzeichnet, dass** die Trennung im Anschluss an das In-Kontakt-Bringen, nach dem Aufhören des Flusses umgesetzt wird.

9. Verfahren nach einem der Ansprüche 1 bis 7, **dadurch gekennzeichnet, dass** die Trennung während des In-Kontakt-Bringens umgesetzt wird.

10. Verfahren nach Anspruch 9, **dadurch gekennzeichnet, dass** das feste Borazan (NH₃BH_{3 (s)}), das auf einem Filter (2) platziert ist, mit einem gasförmigen Fluss von Ammoniak (NH_{3 (g)}) in Kontakt gebracht wird und dadurch, dass die erzeugte flüssige Phase (L) unter dem Filter (2) zurückgewonnen wird, während die feste Phase (S) von dem Filter (2) zurückgehalten wird.

## Claims

1. A method for purifying solid borazane (NH₃BH_{3 (s)}) containing impurities, **characterized in that** it comprises:
a) bringing solid borazane (NH₃BH_{3 (s)}) containing impurities into contact with a stream of gaseous ammonia (NH_{3 (g)}) to obtain, by selective liquefaction of the borazane, a liquid phase (L) containing liquefied borazane and liquefied ammonia and a solid phase (S) constituted of at least a part of said impurities;
b) separating said liquid (L) and solid (S) phases for recovery of said liquid phase (L), on the one hand, and of said solid phase (S), on the other hand;
c) removing the ammonia from said recovered liquid phase (L), this removal causing precipitation of the purified borazane (NH₃BH_{3 (s')}); and
d) recovering said purified precipitated borazane (NH₃BH_{3 (s')}).

2. The method as claimed in claim 1, **characterized in that** it is performed at atmospheric pressure and at room temperature.

3. The method as claimed in claim 1 or 2, **characterized in that** it is performed continuously.

4. The method as claimed in any one of claims 1 to 3, **characterized in that** said solid borazane (NH₃BH_{3 (s)}) is in dispersed form or in undispersed form.

5. The method as claimed in any one of claims 1 to 4, **characterized in that** the gaseous ammonia (NH_{3 (g)})is used in a gaseous ammonia/solid borazane mole ratio (R = NH_{3 (g)}/NH₃BH_{3 (s)}) of greater than 1, advantageously between 5 and 15.

6. The method as claimed in any one of claims 1 to 5, **characterized in that** the separation of the liquid (L) and solid (S) phases is performed by filtration or by centrifugation, advantageously by filtration.

7. The method as claimed in any one of claims 1 to 6, **characterized in that** the ammonia is removed from said recovered liquid phase (L) by evaporation.

8. The method as claimed in any one of claims 1 to 7, **characterized in that** said separation is performed on conclusion of said bringing into contact, after stopping said stream.

9. The method as claimed in any one of claims 1 to 7, **characterized in that** said separation is performed during said bringing into contact.

10. The method as claimed in claim 9, **characterized in that** said solid borazane (NH₃BH_{3 (s)}), placed on a filter (2), is brought into contact with a stream of ammonia gas (NH_{3 (g)})and **in that** the liquid phase (L) generated is recovered below said filter (2) whereas the solid phase (S) is retained by said filter (2).
